Europäisches Patentamt

European Patent Office

Office européen des brevets

(11) Numéro de publication: **0 251 292 B1**

(12) **FASCICULE DE BREVET EUROPEEN**

(45) Date de publication de fascicule du brevet:
13.03.91

(21) Numéro de dépôt: **87109400.9**

(22) Date de dépôt: **30.06.87**

(51) Int. Cl.⁵: **H01Q  15/00, H01Q 15/14,
B32B 15/08**

(54) **Support composite avec gravure metallique.**

(30) Priorité: **02.07.86 FR 8609612**

(43) Date de publication de la demande:
**07.01.88 Bulletin  88/01**

(45) Mention de la délivrance du brevet:
**13.03.91 Bulletin  91/11**

(84) Etats contractants désignés:
**BE DE FR GB IT**

(56) Documents cités:
FR-A- 2 356 509
FR-A- 2 518 828
GB-A- 2 019 313

17TH AEROSPACE SCIENCES MEETING, New
Orleans, 15-17 janvier 1979, pages 1-8; V.F.
MAZZIO et al.: "Optimized design and fabrication processes for advanced composite
spacecraft structures"

IEEE TRANSACTIONS ON ANTENNAS AND
PROPAGATION, vol. AP-27, no. 4, juillet 1979,
pages 466-473, IEEE, New York, US; V.D.
AGRAWAL et al.: "Design of a dichroic cassegrain subreflector"

(73) Titulaire: **ALCATEL TRANSMISSION PAR FAIS-
CEAUX HERTZIENS A.T.F.H.
55, rue Greffulhe
F-92300 Levallois-Perret Cédex(FR)**

(72) Inventeur: **Hancali, Stéphane
66 rue des Rouge Gorges
Jouy Le Moutier F-95000 Cergy(FR)**
Inventeur: **Van den Abbeele, Alfred
28 rue de la Paix
F-94300 Vincennes(FR)**

(74) Mandataire: **Weinmiller, Jürgen et al
Lennéstrasse 9 Postfach 24
W-8133 Feldafing(DE)**

## Description

L'invention se rapporte à un support composite avec gravure métallique.

Les supports utilisés actuellement pour graver un métal, par exemple du cuivre, sont du verre-téflon, du verre-époxy, du kapton, ... . Ces matériaux ont des caractéristiques qu présentent des inconvénients : rigidité, faible résistance mécanique, mauvaise tenue au vieillissement et aux conditions atmosphériques et facteur de perte en fréquence important.

Pour pallier ces inconvénients l'invention a pour objet un support composite souple.

L'invention propose à cet effet un support composite avec gravure métallique caractérisé en ce qu'il comprend superposées avec un tissu de verre, successivement de part et d'autre de chaque face de ce tissu, d'un côté une couche d'une première résine, une pellicule de colle et une couche de métal, sur laquelle est effectuée la dite gravure de l'autre côté une couche de la première résine, et une couche d'une deuxième résine.

Un tel support n'évolue pas dans le temps : il est insensible à la chaleur (dilatation), à la lumière et aux ondes électromagnétiques ...

Avantageusement, l'invention propose un support dans lequel la couche de métal est un feuillard de cuivre, la première résine est une résine appartenant à la famille de polyuréthanes et la seconde résine est une résine époxy.

Avantageusement, l'invention propose un support ayant une épaisseur de quelques dizaines de micromètres dans lequel le tissu de verre a une trame très fine.

Les caractéristiques et avantages de l'invention ressortiront d'ailleurs de la description qui va suivre, à titre d'exemple non limitatif, en référence aux dessins annexés sur lesquels :

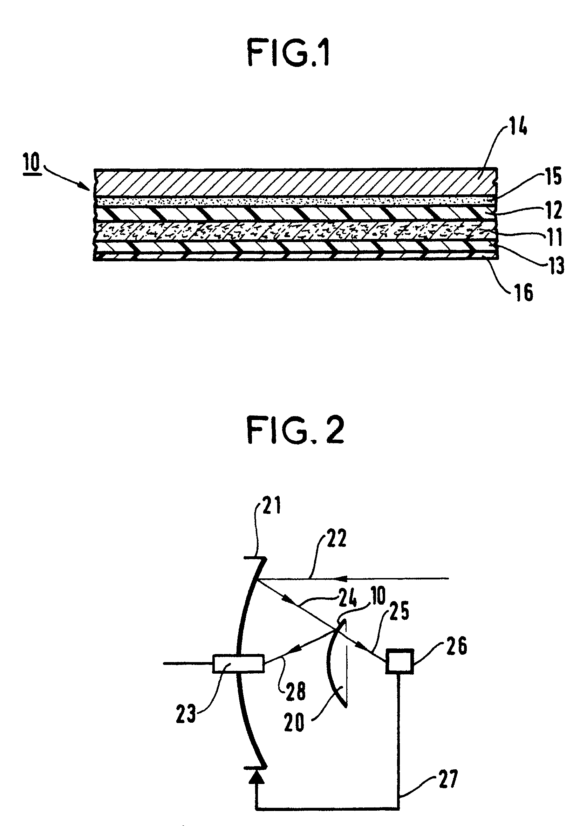

- la figure 1 représente le support de l'invention,
- la figure 2 représente une utilisation du support de l'invention.

Le support de l'invention 10, comporte un tissu de verre 11 imprégné sur ses deux faces d'une première résine pour former deux couches 12, 13 de cette même résine.

Une couche métallique 14 est disposé sur l'une des faces de ce composite, et maintenu au moyen d'une pellicule de colle 15.

Une fine couche 16 d'une seconde résine est disposée sur le côté du support opposé à la couche de métal 14.

Les différents constituants du système sont choisis pour leurs avantages techniques :

Le support-tissu de verre a une trame très fine : il a des qualités de : résistance mécanique, souplesse et perméabilité électromagnétique.

La première résine ou résine d'imprégnation présente des caractéristiques de résistance à l'humidité et de souplesse permettant à l'ensemble du support d'épouser par exemple une forme parabolique.

La colle est adaptée au tissu, à la résine et au métal. Elle doit être souple et avoir une température de polymérisation inférieure à celle de dégradation de la résine.

La couche de métal 14 a une épaisseur satisfaisant aussi bien aux exigences de fréquences désirées mais également à la souplesse de l'ensemble.

La seconde résine, qui est une résine de finition, est très résistante aux agents chimiques et à l'humidité.

Le support dans son ensemble est stable dans le temps et donc résistant aux conditions atmosphériques.

La première résine peut être, par exemple, de la famille des polyuréthanes.

La seconde résine peut être, par exemple, une résine epoxy.

Le support dans son ensemble forme une épaisseur de quelques dizaine de micromètres, la couche de métal étant par exemple une couche de cuivre ayant une épaisseur d'environ 15 micromètres.

Après gravure du métal, le substrat est recouvert de motifs métalliques qui peuvent avoir des formes quelconques par exemple circulaires.

Dans un cas particulier d'utilisation, le support 10 de l'invention est utilisé à la surface d'un subréflecteur 20 d'une antenne qui comporte un réflecteur principal 21.

Une onde radio-électrique 22 qui arrive sur le réflecteur 21 est réfléchie (24). Cette partie de l'onde vient frapper le subréflecteur 20 recouvert du support 10 de l'invention. Elle se subdivise en deux parties : la première 25, dans une première gamme de fréquences, est transmise vers une source 26 puis renvoyée vers l'antenne par l'intermédiaire d'un guide d'onde 27, la seconde 28, dans une deuxième gamme de fréquences, étant envoyée vers une source 23.

Le support de l'invention peut être, par exemple, transparent aux fréquences 6 et 7 GHz et réfléchissant les 11 GHz. La source 26 est une source 6 et 7 GHz ; la source 23 est une source 11 GHz.

Le support de l'invention peut avoir de nombreux domaines d'utilisation par exemple :
- celui des surfaces planes ou courbes sélectives en fréquence couvrant par exemple les longueurs d'onde centimétriques et millimétriques ;
- celui des antennes en circuit imprimé plan ou courbe de type réseau passif ou actif convient par exemple les longueurs d'ondes centimétriques et millimétriques.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. / Support composite avec gravure métallique, caractérisé en ce qu'il comprend superposées avec un tissu de verre (11), successivement de part et d'autre de chaque face de ce tissu, d'un côté une couche (12) d'une première résine, une pellicule de colle (15) et une couche de métal (14) sur laquelle est effectuée ladite gravure, de l'autre côte une couche (13) de la première résine, et une couche (16) d'une deuxième résine.

2. Support selon la revendication 1, caractérisé en ce que la couche de métal (14) est un feuillard de cuivre.

3. Support selon l'une quelconque des revendications précédentes, caractérisé en ce que la première résine est une résine appartenant à la famille de polyuréthanes.

4. Support selon l'une quelconque des revendications précédentes, caractérisé en ce que la seconde résine est une résine époxy.

5. Support selon l'une quelconque des revendications précédentes, caractérisé en ce que le tissu de verre a une trame très fine.

6. Support selon l'une quelconque des revendications précédentes, caractérisé en ce qu'il a une épaisseur de quelques dizaines de micromètres.

**Claims**

1. A composite support for metal etching, characterized in that it comprises in superposition on a glass fiber cloth (11) , successively on one side of said cloth a layer (12) of a first resin, a film of glue (15) and a layer of metal (14), on which said etching is performed, and on the other side of said cloth a layer (13) of the first resin, and a layer (16) of a second resin.

2. A support according to claim 1, characterized in that the metal layer (14) is a copper foil.

3. A support according to any one of the preceding claims, characterized in that the first resin is a resin belonging to the polyurethane family.

4. A support according to any one of the preceding claims, characterized in that the second resin is an epoyx resin.

5. A support according to any one of the preceding claims, characterized in that the glass fiber cloth has a very fine weft.

6. A support according to any one of the preceding claims, characterized in that it is a few tens of micrometers thick.

**Ansprüche**

1. Sandwich-Träger mit Metallätzung, dadurch gekennzeichnet, daß er auf der einen Seite eines Glasgewebes (11) eine Schicht (12) aus einem ersten Harz, darauf einen Klebstofffilm (15) und darauf eine Metallschicht (14), auf der die Ätzung erfolgt, und auf der anderen Seite des Glasgewebes (11) eine Schicht (13) aus dem ersten Harz und darauf eine Schicht (16) aus einem zweiten Harz aufweist.

2. Träger nach Anspruch 1, dadurch gekennzeichnet, daß die Metallschicht (19) aus einer Kupferfolie besteht.

3. Träger nach einem beliebigen der vorhergehenden Ansprüche, dadurch gekennzeichnet, daß das erste Harz ein Harz aus der Familie der Polyurethane ist.

4. Träger nach einem beliebigen der vorhergehenden Ansprüche, dadurch gekennzeichnet, daß das zweite Harz ein Epoxyharz ist.

5. Träger nach einem beliebigen der vorhergehenden Ansprüche, dadurch gekennzeichnet, daß das Glasgewebe einen sehr feinen Schußfaden aufweist.

6. Träger nach einem beliebigen der vorhergehenden Ansprüche, dadurch gekennzeichnet, daß er eine Dicke von einigen zehn Mikrometer besitzt.

# FIG.1

# FIG.2